# NEUE EUROPÄISCHE PATENTSCHRIFT

(11) **EP 2 462 557 B2**
(45) Veröffentlichungstag und Bekanntmachung des Hinweises auf die Entscheidung über den Einspruch: **22.03.2023**
(45) Hinweis auf die Patenterteilung: 04.03.2015
(21) Anmeldenummer: 10752263.3
(22) Anmeldetag: 06.08.2010
(51) Int. Cl.: G06T 7/20, G06T 5/00

(54) **VERFAHREN ZUR VIDEOANALYSE**
METHOD FOR VIDEO ANALYSIS
PROCÉDÉ D'ANALYSE VIDÉO

(30) Priorität: 06.08.2009 AT 12442009
(43) Veröffentlichungstag der Anmeldung: 13.06.2012
(73) Patentinhaber: KiwiSecurity Software GmbH, 1110 Wien (AT)
(72) Erfinder: RÖHR, Robert, A-1130 Wien (AT)
(74) Vertreter: Kramer Barske Schmidtchen Patentanwälte PartG mbB
(86) Internationale Anmeldenummer: PCT/AT2010/000288
(87) Internationale Veröffentlichungsnummer: WO 2011/014901

(56) Entgegenhaltungen:
- EP-A2- 1 318 444
- EP-A2- 1 705 592
- WO-A1-03/049009
- WO-A1-2005/062256
- DE-A1- 4 314 483
- FR-A1- 2 895 865
- US-A1- 2004 047 419
- US-A1- 2005 111 701
- US-A1- 2005 152 579
- US-A1- 2006 222 213
- US-A1- 2007 058 837
- US-B1- 6 977 664
- DUFAUX F ET AL: "Video surveillance using JPEG2000", PROCEEDINGS OF SPIE, SPIE, USA, Bd. 5558, 1. November 2004 (2004-11-01), Seiten 268-275, XP002523127, ISSN: 0277-786X, DOI: DOI:10.1117/12.564828
- DUFAUX F ET AL: "PRIVACY ENABLING TECHNOLOGY FOR VIDEO SURVEILLANCE", PROCEEDINGS OF SPIE, SPIE, USA, Bd. 6250, Nr. 1, 20. April 2006 (2006-04-20), Seiten 62500M-1, XP002549190, ISSN: 0277-786X, DOI: DOI:10.1117/12.664945
- "FUNCTIONAL MODEL OF A CONDITIONAL ACCESS SYSTEM", EBU REVIEW- TECHNICAL, EUROPEAN BROADCASTING UNION. BRUSSELS, BE, Nr. 266, 21. Dezember 1995 (1995-12-21), Seiten 64-77, XP000559450, ISSN: 0251-0936
- DUFAUX, FRÉDÉRIC et al.: "Scrambling for Video Surveil- lance with Privacy.", IEEE, 2006,
- RUSSELL, DAVID et al.: "A highly efficient block-based dynamic background model.", IEEE, 2005, pages 417-422,
- LOVE, NICOLE S. et al.: "An experimental comparison of block matching techniques for detection of moving objects .", Applications of Digital image processing, 2006,
- CHEN, Y.-T. et al.: "Efficient hierarchical method for background subtraction.", Pattern Recognition, 2006,
- WATANABE, HIROSHI et al.: "Sprite coding in object-based video coding standard: MPEG-4.", World Multiconference on Systemics, Proc. Cybernetics and Informatics (SCI, 2001, pages 420-425,
- MPEG-4 H.264 in Echtzeit auf PC komprimieren und dekodie- ren. Golem.de, 2003,
- Internet Archive Wayback Machine, 2008, Retrieved from the Internet: URL:http://www.roborealm.com/help/Pixelate .php

## Beschreibung

Die Erfindung betrifft ein Verfahren zur Videoanalyse gemäß dem Gattungsbegriff des Patentanspruches 1.

Es sind Verfahren zur Videoanalyse bzw. zur Videoüberwachung bekannt, bei welchen zu überwachende Bereiche mittels wenigstens einer Videokamera überwacht werden, und das Bild durch einen Kontroller visuell überwacht wird, bzw. aufgezeichnet wird. Derartige bekannte Verfahren weisen hinsichtlich des Datenschutzes bzw. des Schutzes der Privatsphäre Nachteile auf, da Menschen mit den heutigen Videoüberwachungsanlagen in der Regel eindeutig individuell identifizierbar sind. Solche Anlagen werden daher von vielen, auch unbescholtenen Menschen abgelehnt, da diese kein zusätzliches Sicherheitsgefühl durch die Videoüberwachung empfinden, sondern sich vielmehr überwacht fühlen. Zudem besteht bei vielen dieser Anlagen die Möglichkeit, durch das kontrollierende Wachpersonal Teile der Videoaufzeichnungen wiederholt zu sichten bzw. zu kopieren. Menschen in videoüberwachten Umgebungen fühlen sich daher vielfach einer wenig greifbaren Instanz bzw. deren Mitarbeitern ausgeliefert.

Die US 2005/152579 A1 zeigt eine Videoüberwachungsanlage bei welcher die Gesichter überwachter Personen verpixelt werden.

Die US 2006/222213 A1 offenbart ein Verfahren zur Überwachung mittels Videokameras, wobei die Privatsphäre der überwachten Personen geschützt werden soll. Hierbei werden charakteristische Merkmale der Personen erkannt, und die tatsächlichen Gesichter der überwachten Personen durch computergenerierte Grafiken, welche aber die charakteristischen Merkmale beinhalten, ersetzt.

Aus der WO 03/049009 A1 ist ein Videoüberwachungssystem bekannt, bei welchem einzelne Objekte in einer Szene lokalisiert werden und in Abhängigkeit von Vorgaben in der Kameraszene maskiert werden.

Die WO 2005/062256 A1 offenbart ein Verfahren zum automatisierten, nachträglichen Entfernen von bewegten Objekten aus einem mit einem bildaufzeichnenden Gerät aufgenommenen Bild.

Die XP 002523127 zeigt ein Videoüberwachungssystem bestehend aus den drei Kernkomponenten, smart Kameras, Server und Benutzer, welche durch ein IP-Netzwerk verbunden sind.

Die XP 002549190 offenbart im Wesentlichen eine Weiterentwicklung der XP 002523127. Ein Unterschied zur XP 002523127 ist beispielsweise, dass nun eine Motion JPEG 2000 Kompression statt einer JPEG 2000 Kompression vorgesehen ist.

Aus der FR 2 895 865 A1 ist ein Verfahren zur verschlüsselten Distribution von Videosignalen bekannt, beispielsweise Fernsehprogrammen, um ein nicht befugtes Empfangen dieser Programme zu unterbinden.

Die XP 000559450 zeigt ebenfalls ein Verfahren zur verschlüsselten Distribution von Videosignalen, beispielsweise Fernsehprogrammen, um ein nicht befugtes Empfangen dieser Programme zu unterbinden.

Die US 2005/111701 A1 offenbart ein Videoüberwachungssystem bestehen aus mehreren autonomen Überwachungskameras. Das Videosignal der Überwachungskameras wird dabei nicht übertragen sondern vor Ort gespeichert und nur im Anlassfall abgerufen Aus der EP 1 705 592 A2 ist ein Verfahren zur Steuerung eines Zugriffs eines Computers auf Nutzerdaten bekannt.

Die EP 1 318 444 A2 offenbart ein Datenverschlüsselungs- und Entschlüsselungssystem für einen Datenträger, insbesondere eine Festplatte eines Computers.

Durch diese ablehnende Haltung vieler Mitmenschen wird die Verbreitung von Videoüberwachungsanlagen immer wieder verzögert, wodurch jedoch auch die in vielen Fällen - bei installierten Videoüberwachungsanlagen - erfolgreiche Aufklärung von Verbrechen bzw. unbefugten Handlungen vermindert bzw. verhindert wird. Insbesondere hinsichtlich der vor allem in den Großstädten weiter steigenden Kriminalität sowie des internationalen Terrorismus ist daher die gegenwärtige Situation weder für die Sicherheitskräfte noch für die Bevölkerung befriedigend.

Aufgabe der Erfindung ist es daher ein Verfahren zur Videoanalyse der eingangs genannten Art anzugeben, mit welchem die genannten Nachteile vermieden werden können, mit welchem ein Schutz von Menschen und Anlagen erzielt bzw. die Aufklärung von Verbrechen bzw. unbefugten Handlungen unterstützt wird, und gleichzeitig die individuellen Rechte bzw. die Privat- und/oder Intimsphäre der überwachten Menschen gesichert werden können.

Erfindungsgemäß wird dies durch die Merkmale des Patentanspruches 1 erreicht.

Dadurch kann ein Verfahren zur Videoanalyse geschaffen werden, mit welchem die individuellen Rechte bzw. die Privat- und/oder Intimsphäre eines aufgenommenen Menschen geschützt wird, mit welchem aber trotzdem viele unbefugte bzw. strafbare Handlungen bzw. deren Folgen als solche erkannt werden können, und mit welchem Möglichkeit gegeben sind, das Video als Beweismaterial nach einer unbefugten Handlung bzw. zur Aufklärung eines Verbrechens heranzuziehen. Dadurch kann das überwachende Wachpersonal zwar die Bewegungen eines Menschen und bedingt auch dessen Handeln verfolgen, jedoch ohne die Identität des betreffenden Menschen feststellen zu können. Dadurch besteht weiterhin die Möglichkeit bei einem Gewaltverbrechen, etwa einer Schlägerei, sofort entsprechende Maßnahmen zu ergreifen, ohne die Anonymität des Opfers bzw. der Täter auf dem Video zu verletzen. Dadurch können auch Probleme wie etwa ein Feuer oder eine Überschwemmung noch als solches erkannt werden, und die geeigneten Maßnahmen durch das kontrollierende Wachpersonal ergriffen werden.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Blockschaltbild einer besonders bevorzugten Anordnung;
Fig. 2 ein Beispiel für ein zweites Eingangsbild, und
Fig. 3 ein Beispiel für ein Ausgangsbild.

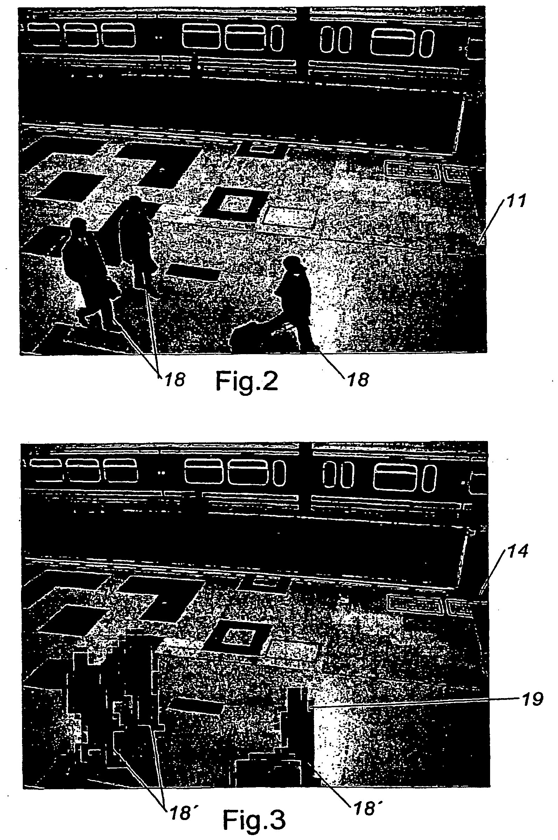

Fig. 3 zeigt ein Beispiel eines Ausgabebilds zufolge eines Verfahrens zur Videoanalyse, insbesondere zur Videoüberwachung, wobei ein digitales Eingangsvideosignal in Echtzeit verarbeitet wird, wobei das Eingangsvideosignal wenigstens ein erstes Eingangsbild und ein - wenigstens mittelbar auf dieses folgendes - zweites Eingangsbild 11 umfasst, wobei die Eingangsbilder 11 jeweils eine vorgebbare Anzahl an Pixel aufweisen, wobei aus dem wenigstens einen ersten Eingangsbild und dem zweiten Eingangsbild 11 ein Hintergrundbild 12 ermittelt wird, und wenigstens ein in dem zweiten Eingangsbild 11 - gegenüber dem Hintergrundbild 12 ortswechselnder -Vordergrundbereich 18 ermittelt wird, wobei der Vordergrundbereich 18 unkenntlich gemacht wird, dass ein Ausgabebild 14 aus dem Hintergrundbild 12 oder dem zweiten Eingangsbild 11 und dem unkenntlich gemachten Vordergrundbereich 18' gebildet wird, dass aus wenigstens mittelbar aufeinander folgenden Ausgabebildern 14 ein Ausgabevideosignal gebildet wird, und dass die Ausgabebilder 14 und/oder das Ausgabevideosignal ausgegeben und/oder gespeichert werden.

Dadurch kann ein Verfahren zur Videoanalyse geschaffen werden, mit welchem die individuellen Rechte bzw. die Privat- und/oder Intimsphäre eines aufgenommenen Menschen geschützt wird, mit welchem aber trotzdem viele unbefugte bzw. strafbare Handlungen bzw. deren Folgen als solche erkannt werden können, und mit welchem die Möglichkeit gegeben ist, das Video als Beweismaterial nach einer unbefugten Handlung bzw. zur Aufklärung eines Verbrechens heranzuziehen. Dadurch kann das überwachende Wachpersonal zwar die Bewegungen eines Menschen und bedingt auch dessen Handeln verfolgen, jedoch ohne die Identität des betreffenden Menschen feststellen zu können. Dadurch besteht weiterhin die Möglichkeit bei einem Gewaltverbrechen, etwa einer Schlägerei, sofort entsprechende Maßnahmen zu ergreifen, ohne die Anonymität des Opfers bzw. der Täter zu verletzen. Dadurch können auch Probleme wie etwa ein Feuer oder eine Überschwemmung noch als solches erkannt werden, und die geeigneten Maßnahmen durch das kontrollierende Wachpersonal ergriffen werden.

Ein erfindungsgemäßes Verfahren ist zur Verwendung mit digitalen Videokameras 1 vorgesehen, wobei jede Art einer Videokamera 1 vorgesehen sein kann, welche ein digitales Videosignal ausgibt. Es kann auch die Verwendung analoger Kameras vorgesehen sein, deren analoges Fernseh- bzw. Videoausgangssignal A/D-gewandelt wird. Bei einem digitalen Videosignal handelt es sich bevorzugt um einen im Wesentlichen binären Datenstrom, welcher eine Reihe aufeinander folgender digitaler Einzelbilder, welche auch als Frame bezeichnet sein können, und gegebenenfalls ein Tonsignal aufweisen, umfasst. Die Einzelbilder des Videosignals sind aus einzelnen Pixeln aufgebaut, welche wenigstens einen Wert aufweisen, etwa einen Grauwert und/oder einen oder mehrere Farbwerte. Es kann im Rahmen der gegenständlichen Erfindung vorgesehen sein, sowohl Graustufenbilder als auch Farbbilder jeweils unterschiedlicher Bittiefen zu verarbeiten.

Bei dem erfindungsgemäßen Verfahren wird aus den einzelnen aufeinander folgenden Eingangsbildern ein Hintergrundbild 12 ermittelt. Dieses Hintergrundbild 12 umfasst dabei sämtliche Bildinformation des Aufnahmebereichs, ohne ortswechselnde Vordergrundbereiche 18. Zur Ermittlung dieses Hintergrundbildes 12 ist bevorzugt vorgesehen, wenigstens zwei wenigstens mittelbar aufeinander folgende Eingangsbilder miteinander zu vergleichen. In der gegenständlich verwendeten Nomenklatur bezeichnet dabei das zweite Eingangsbild 11, dass gegenwärtig durch die Videokamera 1 gelieferte sog. "aktuelle" Eingangsbild 11, wohingegen das erste Eingangsbild wenigstens ein zeitlich vor diesem zweiten Eingangsbild 11 aufgenommenes und verarbeitetes Eingangsbild bezeichnet. Bevorzugt ist für die Ermittlung des Hintergrundbildes vorgesehen, dass eine vorgebbare Anzahl an Eingangsbildern vor dem zweiten Eingangsbild 11 verarbeitet wird, wobei das ermittelte Hintergrundbild 12 mit jedem weiteren eingehenden Eingangsbild ständig erneuert bzw. aktualisiert wird. Das Hintergrundbild 12 wird daher ständig an sich ändernde Umstände, wie etwa sich ändernde Lichtverhältnisse oder neu hinzukommende statische Gegenstände, etwa ein parkendes Auto, angepasst, und "lernt" sozusagen mit. Hiefür ist vorgesehen, dass zur Ermittlung des Hintergrundbildes 12 und des wenigstens einen ersten Vordergrundbereichs 18 eine Auftretenshäufigkeit der einzelnen Pixel jedes aufeinander folgenden Eingangsbildes ermittelt wird. Durch diese Auftretenswahrscheinlichkeit, welche ständig anhand der neu hinzukommenden Eingangsbilder aktualisiert wird, kann ein ständig aktuelles Hintergrundbild 12 generiert werden. Das jeweils aktuelle Eingangsbild wird hiezu mit möglichen Werten eines Hintergrundbildes verglichen und es wird festgestellt, mit welchem dieser möglichen Werte die einzelnen Pixel des Eingangsbildes am besten übereinstimmen. Dabei wird weiters die Auftretenshäufigkeit der jeweiligen Werte an das neu hinzugekommene Eingangsbild angepasst.

Erfindungsgemäß ist in diesem Zusammenhang besonders bevorzugt vorgesehen, dass zur Ermittlung der Auftretenshäufigkeit der einzelnen Pixel in einem Verarbeitungsschritt stets das gesamte Eingangsbild 11 als solches verarbeitet wird. Es hat sich gezeigt, dass durch eine Verarbeitung des gesamten Bildes anstelle einer pixelweisen Verarbeitung trotz der Anwendung mehrerer Einzeloperationen schneller und mit geringerem Rechenaufwand ein Ergebnis erzielt werden kann. Die Verwendung von einfachen Bitoperationen (and, or, not, ....) unter Zuhilfenahme von Bitmasken in gleicher Größe des zu verarbeitenden Bildes ermöglicht das Vermeiden von Zeitaufwändigen Verzeigungsoperationen, wie (if, then, else, ....). Durch Verwendung von SIMD-Befehlen (single instruction, multiple data) für diese Bitoperationen können sogar in einem Prozessortakt mehrere Pixel des Bildes bearbeitet werden. Diese Methode ist deutlich schneller als ein sequentielles Verarbeiten der Pixel.

Durch Vergleich des eingehenden zweiten Eingangsbildes 11 mit dem Hintergrundbild 12 wird ein Vordergrundbereich 18 ermittelt, welcher gegenüber dem Hintergrundbild 12 ortswechselnd ist.

Erfindungsgemäß ist vorgesehen, dass der Vordergrundbereich 18 unkenntlich gemacht wird, wobei jede Art der Unkenntlichmachung vorgesehen sein kann. Unter dem Begriff "unkenntlich" ist dabei bevorzugt zu verstehen, dass der Vordergrundbereich derart unkenntlich gemacht wird, dass ein menschliches Individuum nicht mehr als bestimmte Person identifiziert werden kann. Dabei ist vorgesehen, dass zur Unkenntlichmachung des Vordergrundbereichs 18 wenigstens dieser Vordergrundbereich 18 durch eine Anzahl an Bereichen, umfassend eine vorgebbare Anzahl an Pixel, dargestellt wird, und dass jedem der Bereiche ein jeweils einheitlicher vorgebbarer Ausgabewert für deren Pixel zugewiesen wird. Dabei wird jedem Pixel eines Bereichs ein einheitlicher Ausgabewert zugewiesen, daher erscheint der Bereich nachfolgend vollständig in einer einheitlichen Farbe und/oder Helligkeit. Dies weist den Vorteil auf, dass dadurch die Umrisse bzw. Silhouette eines Menschen, welche diesen auch noch bei Unschärfe bis zu einem gewissen Grad zumindest für nahestehende Personen identifizierbar machen können, aufgelöst werden, wodurch ein hoher Grad an Unkenntlichkeit erreicht werden kann. Dadurch kann ein tatsächlicher Schutz der Privatsphäre von Menschen erzielt werden.

Besonders bevorzugt ist im Rahmen der gegenständlichen Erfindung vorgesehen, dass lediglich die Umrisse von Menschen erfindungsgemäß unkenntlich gemacht werden, während andere Formen, etwa von Gegenständen, Fahrzeugen und/oder Tieren, unverändert dargestellt werden.

Nachfolgend werden bevorzugte Verfahrensschritte für das besonders bevorzugte Verfahren beschrieben, bei welchen einzelnen Bereichen wenigstens des Vordergrundes 18 einheitliche Werte zugewiesen werden.

Zur Unkenntlichmachung wenigstens der dem Vordergrundbereich 18 zugehörigen Bereiche eines Eingangsbildes ist erfindungsgemäß ein Verfahren vorgesehen, vor dessen Durchführung das zweite Eingangsbild 11 zu dessen Bewertung aufbereitet bzw. verändert wird. Dabei ist vorgesehen, dass die Differenz des Hintergrundbildes 12 und des zweiten Eingangsbildes 11 gebildet wird, und von dem derart gebildeten Differenzbild durch Bildung des Betrages ein Betragsdifferenzbild 13 gebildet wird. Ein derartiges Betragsdifferenzbild 13 zeichnet sich dadurch aus, dass keine Bereiche des zweiten Eingangsbildes mehr aufscheinen, welche nicht möglicherweise dem Vordergrundbereich zugehörigen sind. Diese noch erhaltenen Bereiche sind darüber hinaus in einer Art und Weise verändert, welche eine weitere Bestimmung der Vordergrundbereiche 18 positiv unterstützt.

In weiterer Folge wird das Betragsdifferenzbild 13 in vorgebbar angeordnete Blöcke 19, umfassend eine vorgebbare Anzahl an Betragspixel, geteilt. Ein Betragpixel weist dabei den Wert auf, welcher bei der Bildung des vorstehend beschriebenen Betragsdifferenzbildes 13 das Ergebnis war. Diese Blöcke 19, welche bevorzugt mit den vorstehend bereits angeführten Bereichen identisch sein können, werden bevorzugt geometrisch gleichverteilt, etwa in Form eines Rasters aus gleichartigen Quadraten, auf dem Betragsdifferenzbild 13 angeordnet, und bilden die Basis für die später unkenntlich zu machenden - Bereiche. Dabei sei festgehalten, dass jede Gestaltung Form und Größe eines Blocks 19 vorgesehen sein, welche eine entsprechend vorstehend beschriebene Art der Unkenntlichmachung ermöglicht, daher welche geeignet ist, die Form bzw. Umrisse eines Menschen aufzulösen.

Die Blöcke 19 werden dabei ohne Rücksicht auf bereits ermittelte Vordergrundbereiche 18 auf dem Betragsdifferenzbild 13 verteilt. Es wird daher in weiterer Folge festgestellt bzw. bewertet, ob ein Block 19 als dem Vordergrundbereich 18 zugehörig auszuweisen ist, oder nicht, daher zu bewerten, wie sehr ein jeder Block 19 Teil des Vordergrundbereiches 18 ist bzw. Teil des Hintergrundbildes 12. Daher ist in weiterer Folge vorgesehen, dass jeder der Blöcke 19 auf dessen Zugehörigkeit zum Hintergrundbild 12 oder zum Vordergrundbereich 18 analysiert wird. Durch diese Entscheidung kann festgelegt werden, welchen Blöcken 19 ein jeweils einheitlicher Wert für deren Pixel zugewiesen werden soll.

Für diese Analyse bzw. Bewertung der einzelnen Blöcke 19 haben sich einige Verfahren als besonders vorteilhaft herausgestellt, welche jeweils unterschiedliche Vorteile aufweisen.

Gemäß einem ersten bevorzugten Verfahren zur Analyse der einzelnen Blöcke 19 ist vorgesehen, dass in jedem der Blöcke 19 der Mittelwert der gesamten Betragspixel eines Blocks 19 gebildet wird, welcher bevorzugt auf einen maximalen Wert der Betragspixel normiert wird, dass der Mittelwert mit einem vorgebbaren ersten Vergleichswert verglichen wird, und dass bei Überschreiten des ersten Vergleichswerts der Block 19 als dem Vordergrundbereich 18 zugehörig ausgewiesen wird. Dadurch kann eine einfache Implementierung mit geringem Rechenaufwand und guten Ergebnissen erreicht werden. Gemäß einem zweiten bevorzugten Verfahren zur Analyse der einzelnen Blöcke 19 ist vorgesehen, dass in jedem der Blöcke 19 die Varianz zu den gesamten Betragspixeln eines Blocks 19 gebildet wird, dass die Varianz mit einem vorgebbaren zweiten Vergleichswert verglichen wird, und dass bei Überschreiten des zweiten Vergleichswerts der Block 19 als dem Vordergrundbereich 18 zugehörig ausgewiesen wird. Dadurch kann eine sehr gute Erkennung wenigstens von Teilen menschlicher Gesichter erreicht werden, welche innerhalb des untersuchten Blocks 19 angeordnet sind.

Gemäß einem dritten bevorzugten Verfahren zur Analyse der einzelnen Blöcke 19 ist vorgesehen, dass in jedem der Blöcke 19 jeder der Betragspixel eines Blocks 19 mit einem vorgebbaren dritten Vergleichswert verglichen wird, und dass bei Überschreiten des dritten Vergleichswerts durch eine vorgebbare Anzahl an Betragspixel eines Blocks 19 dieser Block 19 als dem Vordergrundbereich 18 zugehörig ausgewiesen wird. Dies stellt eine besonders einfache Ausbildung dar, welche insbesondere den Vorteil aufweist, dass möglicherweise nicht der gesamte Block 19 analysiert werden muss. Sobald die vorgebbare Anzahl an Betragspixel eines Blocks 19 überschritten sind, kann die weitere Analyse dieses Blocks 19 abgebrochen werden, wodurch Verarbeitungszeit und Ressourcen gespart werden können. Die genannte vorgebbare Anzahl an Betragspixel eines Blocks 19 ist bevorzugt von der Größe eines Blocks 19 abhängig.

Gemäß einem vierten bevorzugten Verfahren zur Analyse der einzelnen Blöcke 19 ist vorgesehen, dass in jedem der Blöcke 19 ein diskretes Transformationsverfahren auf die gesamten Betragspixel angewendet wird, dass wenigstens ein vorgebbarer Frequenzbereich des Ergebnisses der Transformation mit wenigstens einem vorgebbaren vierten Vergleichswert verglichen wird, und bei Überschreiten des vierten Vergleichswerts der Block 19 als dem Vordergrundbereich 18 zugehörig ausgewiesen wird. Dadurch ist eine gezielte Anpassung der Analyse an unterschiedliche objektspezifische Merkmale möglich. Dadurch kann bei einem verarbeitungstechnischen geringen Mehraufwand eine sehr gezielte Analyse durchgeführt werden.

Die angeführten ersten, zweiten, dritten bzw. vierten vorgebbaren Vergleichswerte sind anwendungsabhängig zu wählen.

Erfindungsgemäß kann vorgesehen sein, dass lediglich eine der vorstehend angeführten vier besonders bevorzugten Ausführungsformen vorgesehen ist. Bevorzugt ist jedoch vorgesehen, wenigstens zwei der vorstehend angeführten vier besonders bevorzugten Ausführungsformen anzuwenden, und den betreffenden analysierten Block 19 als dem Vordergrundbereich 18 zugehörig auszuweisen bzw. zu deklarieren, wenn bereits eine der Ausführungsformen den betreffenden Block als dem Vordergrundbereich 18 zugehörig ausweist.

Es ist weiters vorgesehen, dass ein Ausgabebild 14 aus dem Hintergrundbild 12 oder dem zweiten Eingangsbild 11 und dem unkenntlich gemachten Vordergrundbereich 18' gebildet wird. Hiebei ist gemäß einer besonders einfachen ersten Ausführungsform vorgesehen, dass das zweite Eingangsbild 11 oder das Hintergrundbild 12 in die vorgebbar angeordneten Blöcke 19 geteilt wird, dass sämtlichen Pixeln eines Blocks 19, welcher als dem Vordergrundbereich 18 zugehörig ausgegeben wurde, im zweiten Eingangsbild 11 bzw. im Hintergrundbild 12 ein und derselbe einheitliche vorgebbare Ausgabewert zugewiesen wird, und derart das Ausgabebild 14 gebildet wird. Dadurch ist auf sehr einfache Weise eine sehr starke Unkenntlichmachung erzielbar. Da sämtlichen Blöcken 19 ein und derselbe Wert, etwa der selbe Grauwert oder die selbe Farbe zugewiesen wird, wird jede vormalige Struktur des Vordergrundbereichs 18 aufgelöst, und durch eine einheitlich dargestellte Anhäufung von Blöcken 19 ersetzt.

Gemäß einer zweiten - alternativen - Ausführungsform ist vorgesehen, dass das zweite Eingangsbild 11 oder das Hintergrundbild 12 in die vorgebbar angeordneten Blöcke 19 geteilt wird, dass sämtlichen Pixeln eines ersten Blocks 19, welcher als dem Vordergrundbereich 18 zugehörig ausgegeben wurde, im zweiten Eingangsbild 11 oder im Hintergrundbild 12 jeweils der Mittelwert einzelner Werte dieser Pixel im zweiten Eingangsbild 11 als Ausgabewert zugewiesen wird, und derart das Ausgabebild 14 gebildet wird. Dadurch wird zwar eine gute Unkenntlichmachung des Vordergrundbereichs 18 erzielt, wobei jedoch weiters der ortswechselnde Vordergrundbereich 18 noch gut als Objekt, als Mensch oder Tier erkennbar ist. Dadurch sind unterschiedliche Strukturen des Vordergrundbereichs 18 noch teilweise erkennbar.

Es ist vorgesehen, dass das zweite Eingangsbild 11 oder das Hintergrundbild 12 in die vorgebbar angeordneten Blöcke 19 geteilt wird, dass sämtlichen Pixeln eines Blocks 19, welcher als dem Vordergrundbereich 18 zugehörig ausgegeben wurde, im zweiten Eingangsbild 11 oder im Hintergrundbild 12 jeweils ein Ausgabewert zugewiesen wird, welcher Ausgabewert eine Funktion einer Änderung dieses Blocks 19 zwischen dem zweiten Eingangsbild 11 und dem Hintergrundbereich 12 ist, und derart das Ausgabebild 14 gebildet wird. Auch dadurch sind - bei guter Unkenntlichmachung des Vordergrundbereichs - Objekte noch teilweise nach deren Art zuordenbar.

Es kann vorgesehen sein, dass die Darstellung der unkenntlich gemachten Vordergrundbereiche 18' nach jedem neuen Frame bzw. jedem neuen Eingangsbild erneuert wird. Bevorzugt ist vorgesehen, dass zwar neu als Vordergrundbereich 18 identifizierte Blöcke 19 sofort als solche unkenntlich gemacht und derart dargestellt werden, dass jedoch ein dem unkenntlich gemachten Vordergrundbereich 18' zugehöriger Block 19 über eine vorgebbare Anzahl aufeinander folgender weiterer Eingangsbilder als dem unkenntlich gemachten Vordergrundbereich 18' zugehörig ausgegeben wird. Dadurch kann ein Flimmern des Ausgabevideosignals verhindert werden, wodurch weiters die Aufmerksamkeit des Wachpersonals nicht durch ständiges Flimmern abgelenkt wird. Zudem ist dadurch ein über lange Zeit ermüdungsfreies und unabgelenktes Betrachten eines derartigen Ausgabevideosignals möglich.

Um das aufgenommene Eingangsvideosignal nicht für einen unbefugten Betrachter zugänglich zu machen ist vorgesehen, dass das Eingangsvideosignal verschlüsselt gespeichert wird. Bevorzugt ist vorgesehen, dass das aus den Ausgabebildern 14 gebildete Ausgabevideosignal, welches dem Wachpersonal zur Kontrolle des videoüberwachten Bereichs zur Verfügung steht, ebenfalls angespeichert wird, um es der wiederholten Betrachtung zugänglich zu machen. Zur vorteilhaften Nutzung von Speichermedien, wie etwa Festplatten, ist daher vorgesehen, dass eine Anordnung der dem Vordergrundbereich 18 zugehörigen unkenntlich gemachten Blöcke 19 gespeichert wird. Daher wird nicht das Ausgabevideosignal als solches gespeichert, sondern lediglich die Anordnung bzw. die Position der unkenntlich gemachten Blöcke 19, sowie der Grad und das Verfahren der Unkenntlichmachung. Bevorzugt ist dabei vorgesehen diese Anordnung der Blöcke unverschlüsselt zu speichern wodurch der erforderliche Rechenaufwand geringgehalten werden kann. Bei besonderen Sicherheitsanforderungen ist vorgesehen, dass diese Daten ebenfalls verschlüsselt gespeichert werden.

Zur Darstellung eines derart abgespeicherten Videosignals ist dabei bevorzugt vorgesehen, dass ein Zeitabschnitt und eine Zeitdauer aus einem Aufnahmezeitbereich ausgewählt werden, dass das verschlüsselt abgespeicherte Eingangsvideosignal entschlüsselt wird, dass die Anordnung der dem Vordergrundbereich 18 zugehörigen unkenntlich gemachten Blöcke 19 ausgelesen wird, dass die entsprechenden Blöcke 19 in dem entschlüsselten Eingangsvideosignal unkenntlich gemacht werden, und dass das derart gebildete Videosignal ausgegeben wird. Dadurch können sowohl die individuellen Rechte bzw. die Privat- und/oder Intimsphäre der überwachten Menschen gesichert werden, als auch das für eine Überwachung einer Wachmannschaft dargestellte Ausgabevideosignal für eine wiederholte Betrachtung zur Verfügung stehen, ohne hiefür zwei vollständige Videosignale abspeichern zu müssen.

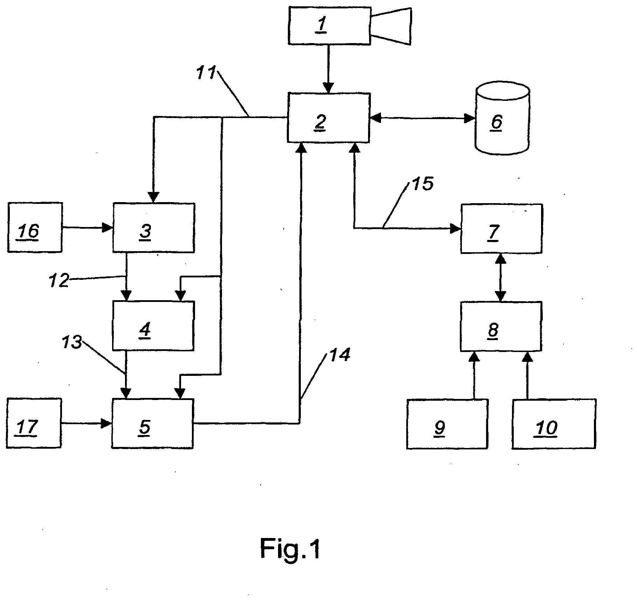

Fig. 1 zeigt eine Anordnung zur Verarbeitung digitaler Videosignale, umfassend wenigstens eine Videokamera 1, welche wenigstens mittelbar mit einem Videoserver 2 verbunden ist, wobei der Videoserver 2 mit einer ersten Einheit 3 zur Bildung eines Hintergrundbildes aus einem digitalen Eingangsvideosignal verbunden ist, wobei ein Ausgang der ersten Einheit 3 mit einem Eingang einer zweiten Einheit 4 verbunden ist, welche zweite Einheit 4 eingangsseitig weiters mit dem Videoserver 2 verbunden ist, und welche zur Bildung des Betrags eines Differenzbildes ausgebildet ist, wobei ein Ausgang der zweiten Einheit 4 mit einem Eingang einer dritten Einheit 5 zur Unkenntlichmachung wenigstens eines ersten Vordergrundbereichs verbunden ist, welche dritte Einheit 5 eingangsseitig weiters mit dem Videoserver 2 verbunden ist, und wobei ein Ausgang der dritten Einheit 5 mit einem Eingang des Videoservers 2 verbunden ist.

Teilweise wurden die zwischen einzelnen Komponenten des Blockschaltbildes gemäß Fig. 1 verlaufenden Pfeile mit Bezugszeichen versehen, welche das zwischen diesen Komponenten anliegende Bild bezeichnen.

Die erste, zweite und/oder dritte Einheit 3, 4, 5 sind bevorzugt durch ein Computersystem umgesetzt. Es ist dabei möglich die jeweiligen Komponenten als vollständige Hardwarelösung zu implementieren oder als kombinierte Hardware/Software-Lösung. Der ersten und der dritten Einheit 3, 5 sind bevorzugt jeweils Speicher bzw. Eingabevorrichtung 16, 17 zur Zuführung von Prozessparametern zugeordnet. Das Eingangsvideosignal bzw. die Eingangsbilder werden zwischen dem Videoserver 2 und der ersten, zweiten und/oder dritten Einheit 3, 4, 5 bevorzugt unverschlüsselt übertragen. Es kann jedoch, etwa bei großer Entfernung zwischen den einzelnen Komponenten bzw. bei besonderen Sicherheitsanforderungen vorgesehen sein, dass diese Verbindung ebenfalls verschlüsselt erfolgt und in den jeweiligen Einheiten 3, 4, 5 entsprechende Decoder vorgesehen sind.

Der Videoserver 2 ist mit einem Datenspeicher 6, etwa einer Festplatte verbunden, bzw. umfasst einen solchen Datenspeicher 6. Die Verbindung zwischen dem Videoserver 2 und dem Datenspeicher 6 erfolgt bevorzugt verschlüsselt, wobei auch das Eingangsvideosignal bevorzugt verschlüsselt abgespeichert wird. Der Videoserver 2 ist mit einem Anwendungsserver verbunden, welcher bevorzugt auch als Entschlüsselungsvorrichtung 7 ausgebildet ist, an welche eine Anzeigevorrichtung 8 angeschlossen ist, etwa ein Bildschirm. Es kann vorgesehen sein, dass die Anzeigevorrichtung 8 Teil eines separaten Computersystem ist, aber auch, dass diese zusammen mit der Entschlüsselungsvorrichtung 7 Teil des Anwendungsservers ist.

Für das nachfolgend beschriebene Verfahren ist bevorzugt vorgesehen, dass der Anwendungsserver wenigstens mittelbar mit einem Lesegerät 9, etwa einem Chipkartenleser, und einem Eingabegerät 10, etwa einer Tastatur verbunden ist.

Um das Betrachten der verschlüsselt abgespeicherten Eingangsvideosignale, in welchen auch die Vordergrundbereiche kenntlich dargestellt sind, nur befugten Personen zugänglich zu machen, ist gemäß einem Verfahren zur Darstellung eines verschlüsselt abgespeicherten ersten Videosignals vorgesehen, dass wenigstens ein Speichermedium, jeweils umfassend einen Schlüssel zum Entschlüsseln des Videosignals, einem Lesegerät 9 zugeführt wird, welches wenigstens mittelbar mit wenigstens einer Entschlüsselungs- und/oder Anzeigevorrichtung 7, 8 verbunden ist, dass wenigstens ein persönlicher Zugangscode der wenigstens einen Entschlüsselungs- und/oder Anzeigevorrichtung 7, 8 zugeführt wird, dass der wenigstens eine Zugangscode geprüft werden, und dass bei verifiziertem Zugangscode und passendem Schlüssel das verschlüsselte Videosignal entschlüsselt und ausgegeben wird. Dadurch kann eine wiederholte Verletzung der Privat- und/oder Intimsphäre von Menschen in videoüberwachten Umgebungen verhindert werden, wobei trotzdem die Videodaten zur Verbrechensauflclärung bereit stehen. Dadurch kann erreicht werden, dass die bereits bei der Erstellung und Abspeicherung der Videodaten gewahrte Anonymisierung der aufgenommenen Menschen nicht willkürlich und grundlos durch unbefugte Benutzer verletzt werden kann. Eine Betrachtung der Videodaten ist nur durch wenigstens einen Benutzer möglich, welcher sowohl im Besitz eines Speichermediums mit einem Schlüssel, als auch einem Code ist. Dadurch kann Datenmissbrauch wirkungsvoll verhindert werden. Dadurch kann die allgemeine Akzeptanz für Videoüberwachungsanlagen gesteigert werden, und durch deren weitere Verbreitung die Aufklärungsquote bei Verbrechen bzw. unbefugten Handlungen erhöht werden.

Daher ist für die Entschlüsselung und Anzeige sowohl der Datenträger mit dem Schlüssel, etwa eine Chipkarte, als auch ein persönlicher Zugangscode erforderlich. Besonders bevorzugt ist vorgesehen, dass zwei entsprechende Speichermedien und zwei persönliche Zugangscodes erforderlich sind. Dabei kann auch vorgesehen sein, dass der Schlüssel zum Entschlüsseln der verschlüsselt abgespeicherten Daten geteilt auf den beiden Speichermedien abgelegt ist.

Um trotz dieser Sicherheitsvorkehrungen einen Datenmissbrauch weiter einschränken zu können, ist in Weiterbildung der Erfindung vorgesehen, dass weiters - vor Entschlüsselung des verschlüsselt abgespeicherten Videosignals - wenigstens ein Zeitabschnittscode der wenigstens einen Entschlüsselungs- und/oder Anzeigevorrichtung 7, 8 zugeführt wird, dass- neben der Prüfung des wenigstens einen Zugangscodes - der Zeitabschnittscode geprüft wird, und dass bei passendem Schlüssel, Zugangscode und Zeitabschnittscode ein vorgebbarer Zeitabschnitt, mit durch den Zeitabschnittscode vorgegebener Dauer, des verschlüsselten Videosignals entschlüsselt und dargestellt wird. Dadurch kann erreicht werden, dass lediglich ein bestimmter Abschnitt des Eingangsvideos betrachtet werden kann. Beliebiges Betrachten des Eingangsvideos über lange Zeitspannen kann dadurch wirkungsvoll verhindert werden. Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Verfahren zur Videoanalyse, insbesondere zur Videoüberwachung, wobei ein digitales Eingangsvideosignal in Echtzeit verarbeitet wird, wobei das Eingangsvideosignal wenigstens ein erstes Eingangsbild und ein - wenigstens mittelbar auf dieses folgendes - zweites Eingangsbild (11) umfasst, wobei die Eingangsbilder (11) jeweils eine vorgebbare Anzahl an Pixel aufweisen, wobei aus dem wenigstens einen ersten Eingangsbild und dem zweiten Eingangsbild (11) ein Hintergrundbild (12) ermittelt wird, und wenigstens ein in dem zweiten Eingangsbild (11) - gegenüber dem Hintergrundbild (12) ortswechselnder -Vordergrundbereich (18) ermittelt wird, wobei der Vordergrundbereich (18) unkenntlich gemacht wird,
wobei vor der Unkenntlichmachung die Differenz des Hintergrundbildes (12) und des zweiten Eingangsbildes (11) gebildet wird, und von dem derart gebildeten Differenzbild durch Bildung des Betrages ein Betragsdifferenzbild (13) gebildet wird,
wobei in weiterer Folge das Betragsdifferenzbild (13) in vorgebbar angeordnete Blöcke (19), umfassend eine vorgebbare Anzahl an Betragspixel, geteilt wird,
wobei in weiterer Folge jeder der Blöcke (19) auf dessen Zugehörigkeit zum Hintergrundbild oder zum Vordergrundbereich (18) analysiert wird,
wobei das zweite Eingangsbild (11) oder das Hintergrundbild (12) in die vorgebbar angeordneten Blöcke (19) geteilt wird, wobei sämtlichen Pixeln eines Blocks (19), welcher als dem Vordergrundbereich (18) zugehörig ausgegeben wurde, im zweiten Eingangsbild (11) bzw. im Hintergrundbild (12) jeweils ein Ausgabewert zugewiesen wird, welcher Ausgabewert eine Funktion einer Änderung dieses Blocks (19) zwischen dem zweiten Eingangsbild (11) und dem Hintergrundbild (12) ist, und derart ein Ausgabebild (14) aus dem Hintergrundbild (12) oder dem zweiten Eingangsbild (11) und dem unkenntlich gemachten Vordergrundbereich (18') gebildet wird,
wobei aus wenigstens mittelbar aufeinander folgenden Ausgabebildern (14) ein Ausgabevideosignal gebildet wird, wobei die Ausgabebilder (14) und/oder das Ausgabevideosignal ausgegeben und/oder gespeichert werden.

2. Verfahren nach Anspruch 1, **dadurch gekennzeichnet, dass** in jedem der Blöcke (19) der Mittelwert der gesamten Betragspixel eines Blocks (19) gebildet wird, welcher vorzugsweise auf einen maximalen Wert der Betragspixel normiert wird, dass der Mittelwert mit einem vorgebbaren ersten Vergleichswert verglichen wird, und dass bei Überschreiten des ersten Vergleichswerts der Block (19) als dem Vordergrundbereich (18) zugehörig ausgewiesen wird.

3. Verfahren nach einem der Ansprüche 1 oder 2, **dadurch gekennzeichnet, dass** in jedem der Blöcke (19) die Varianz zu den gesamten Betragspixeln eines Blocks (19) gebildet wird, dass die Varianz mit einem vorgebbaren zweiten Vergleichswert verglichen wird, und dass bei Überschreiten des zweiten Vergleichswerts der Block (19) als dem Vordergrundbereich (18) zugehörig ausgewiesen wird.

4. Verfahren nach einem der Ansprüche 1 bis 3, **dadurch gekennzeichnet, dass** in jedem der Blöcke (19) jeder der Betragspixel eines Blocks (19) mit einem vorgebbaren dritten Vergleichswert verglichen wird, und dass bei Überschreiten des dritten Vergleichswerts durch eine vorgebbare Anzahl an Betragspixel eines Blocks (19) dieser Block (19) als dem Vordergrundbereich (18) zugehörig ausgewiesen wird.

5. Verfahren nach einem der Ansprüche 1 bis 4, **dadurch gekennzeichnet, dass** in jedem der Blöcke (19) ein diskretes Transformationsverfahren auf die gesamten Betragspixel angewendet wird, dass wenigstens ein vorgebbarer Frequenzbereich des Ergebnisses der Transformation mit wenigstens einem vorgebbaren vierten Vergleichswert verglichen wird, und bei Überschreiten des vierten Vergleichswerts der Block (19) als dem Vordergrundbereich (18) zugehörig ausgewiesen wird.

6. Verfahren nach einem der Ansprüche 1 bis 5, **dadurch gekennzeichnet, dass** ein dem Vordergrundbereich (18) zugehöriger Block (19) über eine vorgebbare Anzahl aufeinander folgender weiterer Eingangsbilder als dem Vordergrundbereich (18) zugehörig ausgegeben wird.

7. Verfahren nach einem der Ansprüche 1 bis 6, **dadurch gekennzeichnet, dass** eine Anordnung der dem Vordergrundbereich (18) zugehörigen unkenntlich gemachten Blöcke (19) gespeichert wird.

## Claims

1. A method for video analysis, especially for video monitoring, wherein a digital input video signal is processed in real time, wherein the input video signal comprises at least one first input image and a second input image (11), which follows the first input image at least indirectly, wherein the input images (11) each have a specifiable number of pixels, wherein a background image (12) is determined from the at least one first input image and the second input image (11), and at least one foreground area (18) is determined in the second input image (11), the location of said foreground area changing relative to the background image (12), wherein the foreground area (18) is made unrecognizable,
wherein, prior to making the foreground area (18) unrecognizable, the difference between the background image (12) and the second input image (11) is formed, and an amount difference image (13) is formed from the difference image thus formed by formation of the amount,
wherein subsequently the amount difference image (13) is divided into predeterminably arranged blocks (19), comprising a predeterminable number of amount pixels,
wherein subsequently each of the blocks (19) is analyzed with respect to its association with the background image or the foreground area (18),
wherein the second input image (11) or the background image (12) is divided into the predeterminably arranged blocks (19), wherein all pixels of a block (19) which was output as belonging to the foreground area (18) are respectively assigned an output value in the second input image (11) or in the background image (12), which output value is a function of a change of said block (19) between the second input image (11) and the background image (12), and an output image (14) is thus formed in this manner from the background image (12) or the second input image (11) and the foreground area (18') that was made unrecognizable,
wherein an output video signal is formed from output images (14) that follow each other at least indirectly, wherein the output images (14) and/or the output video signal are output and/or stored.

2. The method according to claim 1, **characterized in that** the mean value of the entire amount pixels of a block (19) is formed in each of the blocks (19), which mean value is preferably normalised to a maximum value of the amount pixels, that the mean value is compared with a predeterminable first comparison value, and that upon exceeding the first comparison value the block (19) is determined as belonging to the foreground area (18).

3. The method according to one of claims 1 or 2, **characterized in that** the variance to the entire amount pixels of a block (19) is formed in each of the blocks (19), that the variance is compared with a predeterminable second comparison value, and that upon exceeding the second comparison value the block (19) is shown as belonging to the foreground area (18).

4. The method according to one of claims 1 to 3, **characterized in that** each of the amount pixels of a block (19) is compared with a predeterminable third comparison value in each of the blocks (19), and that upon exceeding the third comparison value by a predeterminable number of amount pixels of a block (19) said block (19) is determined as belonging to the foreground area (18).

5. The method according to one of claims 1 to 4, **characterized in that** a discrete transformation process is applied to the entire amount pixels in each of the blocks (19), that at least one predeterminable frequency range of the result of the transformation is compared with at least one predeterminable fourth comparison value, and that upon exceeding the fourth comparison value the block (19) is determined as belonging to the foreground area (18).

6. The method according to one of claims 1 to 5, **characterized in that** a block (19) belonging to the foreground area (18) is output as belonging to the foreground area (18) for a predeterminable number of successively following further input images.

7. The method according to one of claims 1 to 6, **characterized in that** an arrangement of blocks (19) which were made unrecognizable and which belong to the foreground area (18) is stored.

## Revendications

1. Procédé d'analyse vidéo, en particulier pour la vidéosurveil-lance, dans lequel un signal vidéo numérique d'entrée est traité en temps réel, dans lequel le signal vidéo d'entrée comprend au moins une première image d'entrée et une deuxième image d'entrée (11) - suivant au moins indirectement celle-ci -, dans lequel les images d'entrée (11) contiennent chacune un nombre pouvant être prédéterminé de pixels, dans lequel une image d'arrière-plan (12) est déterminée à partir de l'au moins une première image d'entrée et de la deuxième image d'entrée (11), et au moins une zone de premier plan (18) - dont l'emplacement change dans la deuxième image d'entrée (11) par rapport à l'image d'arrière-plan (12) - est déterminée, dans lequel la zone de premier plan (18) est rendue indiscernable,
dans lequel, avant de la rendre indiscernable, la différence de l'image d'arrière-plan (12) et de la deuxième image d'entrée (11) est calculée et une image de différence de valeur (13) est formée à partir de l'image de différence ainsi formée par le calcul de la valeur, dans lequel l'image de différence de valeur (13) est ensuite partagée en blocs (19) disposés d'une façon pouvant être prédéterminée, comprenant un nombre pouvant être prédéterminé de pixels de valeur, dans lequel chacun des blocs (19) est ensuite analysé pour déterminer s'il appartient à l'image d'arrière-plan ou à la zone de premier plan (18),
dans lequel la deuxième image d'entrée (11) ou l'image d'arrière-plan (12) est partagée en blocs (19) disposés d'une manière pouvant être prédéterminée, dans lequel une valeur de sortie qui est fonction d'une modification du bloc (19) entre la deuxième image d'entrée (11) et l'image d'arrière-fond (12) est attribuée à tous les pixels d'un bloc (19) signalés en sortie comme appartenant à la zone de premier palan (18) dans la deuxième image d'entrée (11) ou dans l'image d'arrière-plan (12), et une image de sortie (14) est ainsi formée à partir de l'image d'arrière-plan (12) ou de la deuxième image d'entrée (11) et de la zone de premier plan rendue indiscernable (18'),
dans lequel un signal vidéo de sortie est formé à partir d'images de sortie (14) qui se suivent au moins indirectement, dans lequel les images de sortie (14) et/ou le signal vidéo de sortie sont émis et/ou enregistrés.

2. Procédé selon la revendication 1, **caractérisé en ce que** dans chacun des blocs (19), la moyenne de tous les pixels de valeur d'un bloc (19) est calculée, laquelle est de préférence nommée à une valeur maximale des pixels de valeur, **en ce que** la moyenne est comparée à une première valeur de comparaison pouvant être prédéterminée et **en ce que** si la première valeur de comparaison est dépassée, le bloc (19) est identifié comme appartenant à la zone de premier plan (18).

3. Procédé selon l'une des revendications 1 ou 2, **caractérisé en ce que** dans chacun des blocs (19), la variance par rapport à l'ensemble des pixels de valeur d'un bloc (19) est calculée, **en ce que** la variance est comparée à une deuxième valeur de comparaison pouvant être prédéterminée et **en ce que** si la deuxième valeur de comparaison est dépassée, le bloc (19) est identifié comme appartenant à la zone de premier plan (18).

4. Procédé selon l'une des revendications 1 bis 3, **caractérisé en ce que** dans chacun des blocs (19), chacune des pixels de valeur du bloc (19) est comparé à une troisième valeur de comparaison pouvant être prédéterminée et **en ce que** si la troisième valeur de comparaison est dépassée par un nombre pouvant être prédéterminé de pixels de valeur d'un bloc (19), ce bloc (19) est identifié comme appartenant à la zone de premier plan (18).

5. Procédé selon l'une des revendications 1 bis 4, **caractérisé en ce que** dans chacun des blocs (19), un procédé de transformation discret est appliqué à l'ensemble des pixels de valeur, **en ce qu'**au moins une plage de fréquences du résultat de la transformation pouvant être prédéterminée est comparée à au moins une quatrième valeur de comparaison pouvant être prédéterminée, et si la quatrième valeur de comparaison est dépassée, le bloc (19) est identifié comme appartenant à la zone de premier plan (18).

6. Procédé selon l'une des revendications 1 bis 5, **caractérisé en ce qu'**un bloc (19) appartenant à la zone de premier plan (18) sur un nombre pouvant être prédéterminé d'autres images d'entrée successives est émis en sortie comme appartenant à la zone de premier plan (18).

7. Procédé selon l'une des revendications 1 bis 6, **caractérisé en ce qu'**une disposition des blocs (19) appartenant à la zone de premier plan (18) qui sont rendus indiscernables est enregistrée.
